# EUROPEAN PATENT APPLICATION

(11) **EP 2 202 976 A1**
(43) Date of publication of application: **30.06.2010**
(21) Application number: 09174313.8
(22) Date of filing: 28.10.2009
(51) Int. Cl.: H04N 7/24, H04N 5/44, H04N 5/00

(54) **Digital broadcast receiving apparatus and signal processing method**

(30) Priority: 24.12.2008 JP 2008328790
(71) Applicant: Kabushiki Kaisha Toshiba, Tokyo 105-8001 (JP)
(72) Inventor: Doniwa, Kenichi, Tokyo 105-8001 (JP)
(74) Representative: Henkel, Feiler & Hänzel

(57) **Abstract**

A digital broadcast receiver according to an embodiment of the invention is receiving digital broadcast packets of a plurality of channels and producing, from each packet, a packet containing a counter value indicating the time the packet arrived and an additional data packet containing specific data to add to the packet containing the counter value, and receiving and demultiplexing the packet containing a counter value and the additional data packet, and comparing the program clock reference (PCR) added to each packet, with the counter value and correcting a system time clock (STC) as needed.

## Description

The present invention relates to a receiving apparatus that can simultaneously receive programs on a plurality of channels and to a signal processing method.

Satellite and terrestrial digital broadcasting are now widely available in addition to conventional terrestrial analog broadcasting. Many stations are therefore now operational, distributing programs (content) consisting of images and sounds. In addition, high-speed communications networks have been brought into service in increasing numbers. Therefore, more and more providers have emerged, some making programs available to the public programs via traditional cable, others over networks. Consequently, people can now select and enjoy any programs they want.

Under these circumstances, there is increasing demand for a receiver that can simultaneously receive a plurality of programs.

Japanese Patent Application Publication (KOKAI) No. 2001-346204 discloses a technique of first multiplexing transport streams (TSs) from a plurality of tuners, in order to produce a TS consisting of packets and to process any delayed packet prior to the other packets before a demultiplexer demultiplexes the TS to produce program data items.

However, nowhere in the above-identified publication it is suggested that a single circuit may process the TS consisting of packets that have been supplied from a plurality of tuners.

An object of this invention is to provide a digital broadcast receiving apparatus and a signal processing method, in which a single circuit can process the video data representing packets acquired from a plurality of tuners.

According to an aspect of the invention, there is provided a digital broadcast receiving apparatus characterized by comprising:
an input conversion module (11) configured to receive digital broadcast packets of a plurality of channels and to produce, from each packet, a packet containing a counter value indicating the time the packet arrived and an additional data packet containing specific data to add to the packet containing the counter value; and
a digital broadcast reception module (21) configured to receive and demultiplex each packet supplied from the input conversion module, to compare the program clock reference (PCR) added to the packet with the counter value and to correct a system time clock (STC) as needed.

The invention can be more fully understood from the following detailed description when taken in conjunction with the accompanying drawings, in which:
FIG. 1 is an exemplary diagram showing an example of a block diagram showing the configuration of a digital broadcast receiving apparatus according to the invention;
FIG. 2 is an exemplary diagram showing examples of the TS packets input from a given number of tuners to the TS input/conversion module in the digital broadcast receiving apparatus of FIG. 1, according to an embodiment of the invention;
FIG. 3 is an exemplary diagram showing an example of the TS packet (multiplexed) which has been output from the TS input/conversion module in the digital broadcast receiving apparatus of FIG. 1, according to an embodiment of the invention;
FIG. 4 is an exemplary diagram showing an example status packet added to a TS packet of FIG. 3 output from the TS input/conversion module, according to an embodiment of the invention; and
FIG. 5 is an exemplary diagram showing an example of the TS packet (multiplexed) output from the TS input/conversion module in the digital broadcast receiving apparatus of FIG. 1, according to an embodiment of the invention.

Embodiments of the invention will be explained in detail hereinafter with reference to the accompanying drawings.

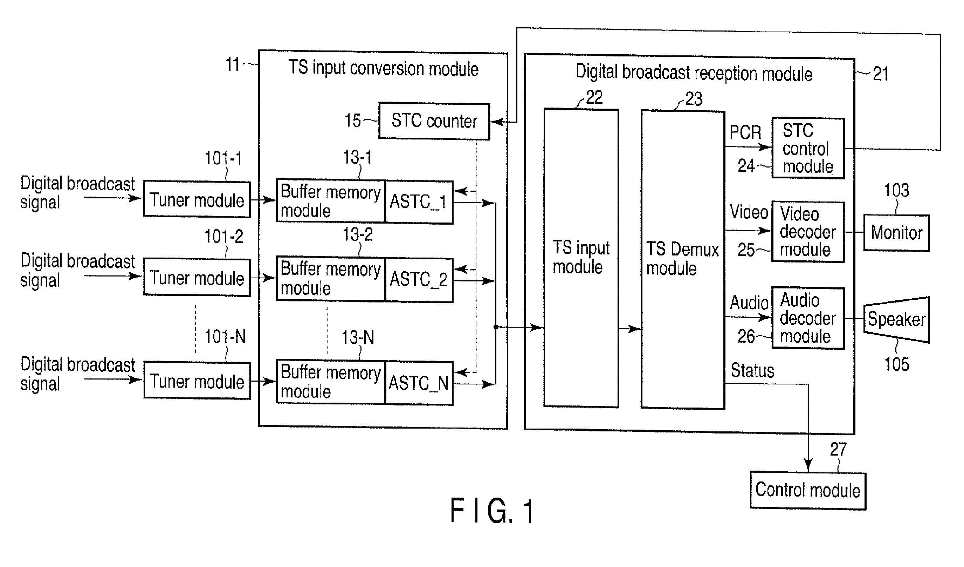

FIG. 1 shows an embodiment of this invention, which is a digital broadcast receiving apparatus.

The digital broadcast receiving apparatus 1 shown in FIG. 1 can receive programs that have been digitally broadcast by means of broadcasting satellites (BS), communications satellites (CS), or terrestrial transmitters. The signals used in each type of broadcasting are signals of the TS type that accord with the Moving Picture Experts Group (MPEG)-2 standard. Each of these types of signal consists of video data (images), audio data (speech or sounds) and other data. In the TS-type broadcast signal, a program clock reference (PCR) value is described. The PCR value is used to synchronize the video and audio data components. Of the components that will be described later, the components called "modules" may be implemented by hardware or software. To implement these modules by software, a CPU or the like is used.

As FIG. 1 shows, the digital broadcast receiving apparatus 1 includes a TS input conversion module 11 and a digital broadcast reception module 21. The TS input conversion module 11 receives the TS packets (transport streams) selected by a given number of tuners associated with the respective channels. The digital broadcast reception module 21 demultiplexes each TS packet that has been multiplexed and has come from the TS input conversion module 11. The digital broadcast reception module 21 thus produces a video output stream and an audio output stream, both of which it then decodes to produce a video signal and an audio signal. The video signal is used to drive a video display device, i.e., a monitor; the audio signal, an audio output device, i.e., a speaker.

The TS input conversion module 11 includes buffer memory modules 13-1, 13-2, ... , 13-N and a system time clock (STC) counter 15. The buffer memory modules 13-1, 13-2, ... , 13-N hold, for a predetermined time, digital broadcast TS packets of N channels that have been input from N tuner modules 101-1, 101-2, ... , 101-N, respectively. The STC counter 15 receives and counts a system clock signal.

The buffer memory modules 13-1, 13-2, ... , 13-N of the TS input conversion module 11 hold the TS packets sent from the associated tuners, the counter values of the STC counter 15 when the TS packets arrived and also the statuses of the TS input conversion module 11, for a predetermined time or until the TS packets are sent to the digital broadcast reception module 21. The each of the tuner modules 101-1, 101-2, ... , 101-N, includes an error correction unit (not shown) each performs, for example, error correction on the broadcast signal receives via an antenna (not shown), a BS digital/CS digital broadcast signal or a terrestrial digital broadcast signal of a selected channel.

The digital broadcast reception module 21 includes, as a minimum, a TS input module 22, a TSDemux (demultiplexer) module 23, an STC control module 24, a video decoder module 25, and an audio decoder module 26. The TS input module 22 receives TS packets input from the buffer memory modules 13-1, 13-2, ... , 13-N. The TSDemux (demultiplexer) module 23 demultiplexes the TS packet input to the TS input module 22, decrypting encrypted components. The STC control module 24 reproduces an STC and inputs the STC to the STC counter 15 of the TS input conversion module 11. A control module 27 is provided outside the TS input conversion module 11 and digital broadcast reception module 21. The control module 27 receives the status, such as an error condition, which has been added in the TS input conversion module 11, and performs necessary control.

Note that the TSDemux module 23 demultiplexes any TS packet input to the TS input module 22. The TS packet is thereby separated into PCR data, video data and audio data. The PCR data is supplied to the STC control module 24; the video data, to the video decoder module 25; and the audio data, to the audio decoder module 26.

The STC control module 24 reproduces, from the PCR data, the system time clock (STC) signal. The STC signal is supplied to the STC counter 15 incorporated in the TS input conversion module 11. In the STC control, the STC signal is compared with the PCR data contained in an MPEG-2 TS packet. If the STC advances with respect to the PCR, it will be corrected, or delayed. If the STC is delayed with respect to the PCR, it will be corrected, or advanced. Correct time is thereby ensured for each TS packet. Both the video data (video signal) decoded by the video decoder module 25 and the audio data (audio signal) decoded by the audio decoder module 26 are, of course, synchronized in accordance with the STC signal.

The video data and audio data that have been decoded by the video decoder module 25 and audio decoder module 26, respectively, are supplied to a monitor device 103 (i.e., video playback device) connected to an external apparatus and a loudspeaker device 105 (i.e., audio playback device), respectively. The monitor device 103 therefore displays the video image, and while the speaker device 105 reproduces the audio (music).

The control module 27 receives the status, such as an error added in the TS input conversion module 11, and performs a necessary process on the status.

In the configuration described above, the buffer memory modules 13-1, 13-2, ... , 13-N and the STC counter 15, which are the components of the TS input conversion module 1, may be implemented by hardware. On the other hand, the TS input module 22, TSDemux module 23, STC control module 24, video decoder module 25, video decoder module 25 and audio decoder module 26, which are the components of the digital broadcast reception module 21, may be implemented by software. In this is the case, the digital broadcast reception module 21 need only incorporate a ROM that stores programs for the software and a RAM that provides a work area.

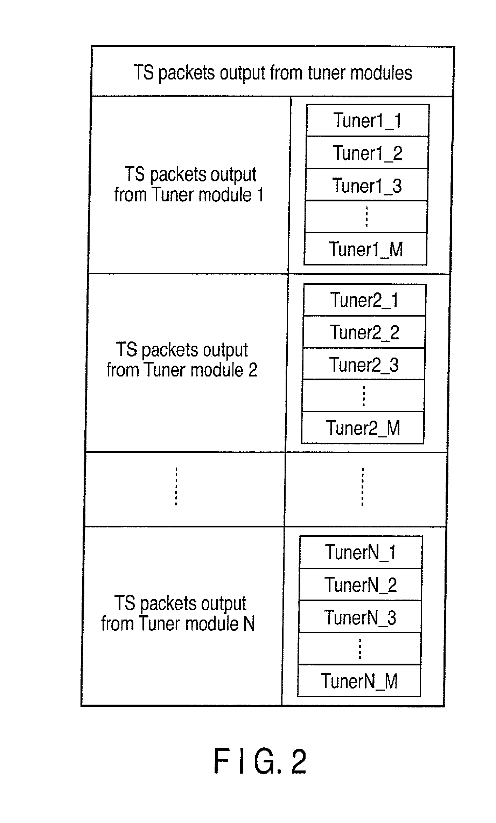

FIG. 2 shows some TS packets sequentially input to the TS input conversion module 1 from the tuners, in the digital broadcast receiving apparatus of FIG. 1.

As shown in FIG. 2, the TS packet output from each tuner module is output as "Tuner 1_1," "Tuner 1_2," ... , "Tunerl_M" (M is a positive integer) output from tuner module 101-1, "Tuner2_1," "Tuner2_2," ... , "Tuner2_M" output from tuner module 101-2, ... , and "TunerN_1," "Tuner2_2," ... , "TunerN_M" output from tuner module 101-N, for a broadcast signal on one channel selected by any tuner module each tuner, e.g., any TS packet output from each tuner module.

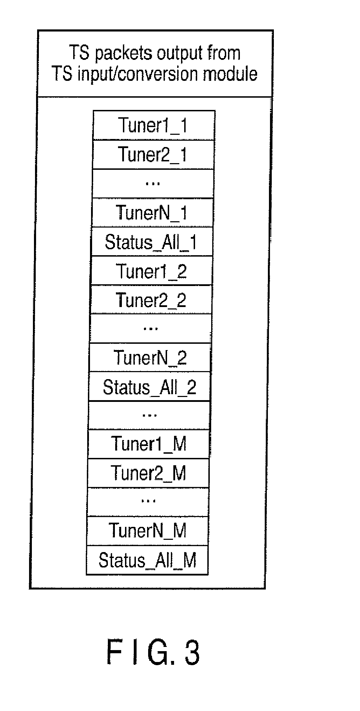

FIG. 3 shows an example format in which the TS input/conversion module converts a TS packet (multiplexed) input from each tuner module before the TS packet is supplied to the TS packet input unit of a digital broadcast receiving module.

As shown in FIG. 3, in the TS input conversion module 11, M packets supplied, respectively from each tuner module in a given number (i.e., N channels), are converted to packets of a specific output format, containing the status data items "Status_A11_1," "Status-A11_2, ... , "Status_A11_M" (M is a positive integer) that indicate the status such as the count (STC value) and an error condition. The count (STC value) is the value of the STC counter 15 when the TS packet is supplied from the tuner module to the digital broadcast reception module 21.

More specific, "Tunerl_1" is the first TS packet input from tuner module 101-1, "Tunerl_2" is the second TS packet input from tuner module 101-1, and so forth. Thus, "Tuner1_M" is the Mth TS packet input from tuner module 101-1.

Similarly, "Tuner2_1" is the first TS packet input from tuner module 101-2, "Tuner2_ 2" is the second TS packet input from tuner module 101-2, ... , and "Tuner2_M" is the Mth TS packet input from tuner module 101-2. Therefore, "TunerN_1" is the first TS packet input from tuner module 101-N, "TunerN_2" is the second TS packet input from tuner module 101-N, ... , and "TunerN_M" is the Mth TS packet input from tuner module 101-N.

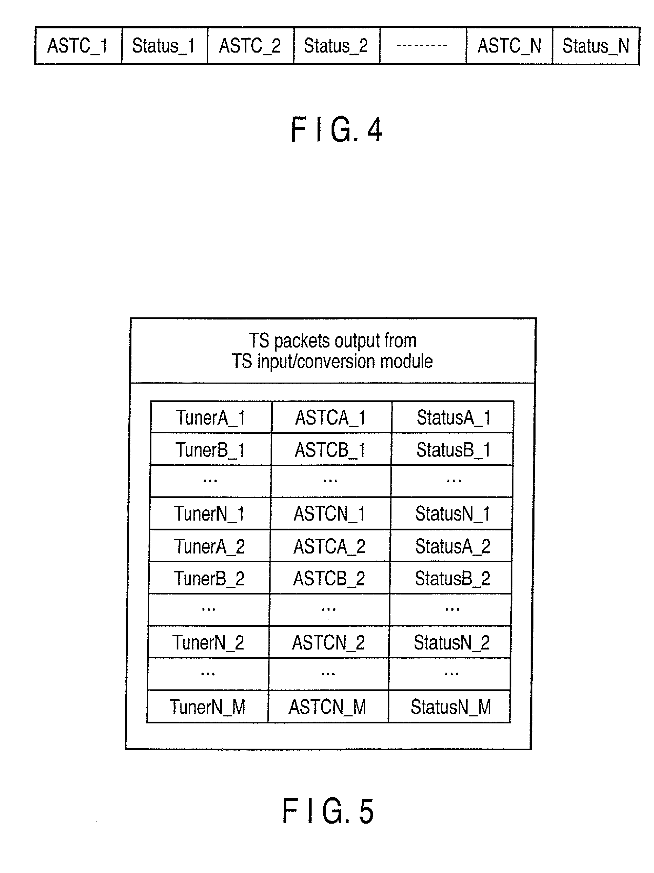

As will be described later in detail with reference to FIG. 4, "Status_A11_1," "Status_A11_2, ... , "Status_A11_M" (M is a positive integer) each consist of an "ASTC_x" data and a "Status_x" data, which are arranged in the order mentioned. "ASTC__x" indicates the value of the STC counter 15 when the TS packets arrive from the respective tuner modules. "Status_x" indicates a status such as an error of the tuner module 101-x. (Note that "_x" designates the associated packet.) Thus, "ASTC_1" indicates the value of the STC counter when the TS packet arrives from tuner module 101-1, and "Status_1" indicates the status such as an error associated with "ASTC_1.

Similarly, "ASTC_2" indicates the value of the STC counter when the TS packet arrives from tuner module 101-2, and "Status_2" indicates the status such as an error associated with "ASTC_2." Likewise, "ASTC_N" indicates the value of the STC counter when the TS packet arrives from tuner module 101-N, and "Status_N" indicates the status such as an error associated with "ASTC_N."

A format is thus used in which an "ASTC_x" data indicating the STC counter value at the time of the STC packet arrival from any tuner module and a "Status_x" data associated with the "ASTC_x" data are arranged in sequence. Therefore, the status data (specific data), such as the count of the STC counter 15 and the error that have arrived at the TS input module 22, can be input to a single TS input module 22, even if the TS input module 22 of the digital broadcast reception module 21 supports only one TS packet output from one tuner module.

The MPEG-2 TS packet thus input to the TS input module 22 of the digital broadcast reception module 21 is supplied from the TS input module 22 to the TSDemux module 23. The TSDemux module 23 demultiplexes (or divides) the MPEG-2 TS packet.

Of the outputs of the TSDemux module 23, an MPEG-2 TS packet, which contains PCR data, is supplied to the STC control module 24, an MPEG-2 TS packet, which contains video data, is supplied to the video decoder module 25, and a TS packet MPEG-2, which contains audio data, is supplied to the audio decoder module 26. Status data items, such as "Status_A11_1" "Status_A11_2," ... , "Status_A11_M," are supplied to the STC control 24 and the control module 27.

The STC control module 24 receives the MPEG-2 TS packet and compares the PCR data contained in the MPEG-2 TS packet, which has values "ASTC_1," "ASTC_1," ... , "ASTC_N" contained, respectively in "Status_A11_1," "Status_A11_2," ... , "Status_A11_M," added by the TS input conversion module 11. Therefore, the STC is delayed if it advances with respect to the PCR, and is advanced if it is delayed with respect to the PCR. The STC is thus corrected.

When MPEG-2 TS packets are so accumulated in the buffer memory modules 13-1, 13-2, ... , 13-N, respectively, the STC value is added to these packets through the above-mentioned format conversion. The STC can therefore be correctly controlled even if there is a change in the delay time of inputting the packets from each tuner module to the TS input module 22.

The use of the format shown in FIG. 4 can minimize the amount of data that each status packet must hold. The status packets will therefore occupy no larger storage areas than necessary in the data memory.

FIG. 5 shows another example output format for TS packet input from any tuner module to the TS input/conversion module, then converted by the TS input/conversion module and finally supplied to the input unit of the digital broadcast reception module. (This example format is different from the example format shown in FIG. 3.)

The digital broadcast reception module 21 may receive packets containing additional data, as well as the TS packets output from the tuner modules. In this case, the counts "ASTCA_1," "ASTCB_1," ... , "ASTCN_1" of the STC counter or the statuses "StatusA_1," "StatusB_1," ... , "StatusN_1" can be added to the TS packets as shown in FIG. 5 (Note that ASTCA, ASTCB and ASTCN are symbols denoting a tuner module, another tuner module and an Nth tuner module, respectively; and similarly, StatusA, StatusB and StatusN are symbols denoting a tuner module, another tuner module and an Nth tuner module).

In FIG. 5, for example:
"TunerA_1" is the first TS packet input from tuner module A (101-1);
"TunerB_1" is the first TS packet input from tuner module B (101-2);
"TunerN_1" is the first TS packet input from tuner module N (101-N);
"TunerA_2" is the second TS packet input from tuner module A;
"TunerB_2" is the second TS packet input from tuner module B;
"TunerN_2" is the first TS packet input from tuner module N;
"TunerA_M" is the Mth TS packet input from tuner module A;
"TunerB_M" is the Mth TS packet input from tuner module B; and
"TunerN_M" is the Mth TS packet input from tuner module N.

Further:
"ASTCA_1" is the value of the STC counter when the first TS packet arrives from tuner module A;
"ASTCB_1" is the value of the STC counter when the first TS packet arrives from tuner module B;
"ASTCN_1" is the value of the STC counter when the first TS packet arrives from tuner module N;
"ASTCA_2" is the value of the STC counter when the second TS packet arrives from tuner module A;
"ASTCB_2" is the value of the STC counter when the second TS packet arrives from tuner module B;
"ASTCN_2" is the value of the STC counter when the second TS packet arrives from tuner module N;
"ASTCA_M" is the value of the STC counter when the Mth TS packet arrives from tuner module A;
"ASTCB_M" is the value of the STC counter when the Mth TS packet arrives from tuner module B; and
"ASTCN_M" is the value of the STC counter when the Mth TS packet arrives from tuner module N.

Moreover, the following statuses are added to items "ASTC" contained in the TS packets:
"StatusA_1" indicating an error made when the first TS packet arrives from tuner module A;
"StatusB_1" indicating an error made when the first TS packet arrives from tuner module B;
"StatusN_1" indicating an error made when the first TS packet arrives from tuner module N;
"StatusA_2" indicating an error made when the second TS packet arrives from tuner module A;
"StatusB_2" indicating an error made when the second TS packet arrives from tuner module B;
"StatusN_2" indicating an error made when the second TS packet arrives from tuner module N;
"StatusA_M" indicating an error made when the Mth TS packet arrives from tuner module A;
"StatusB_M" indicating an error made when the Mth TS packet arrives from tuner module B; and
"StatusN_M" indicating an error made when the Mth TS packet arrives from tuner module N.

Thus, TS packets coming from a given number of tuner modules can be input to the single TS input module 22 provided in the digital broadcast reception module 21.

In the format shown in FIG. 5, the data length is indeed greater than in the formats shown in FIGS. 3 and 4 (that is more "reserves" exist). The process for each channel (i.e., for the output of each tuner module) can be performed at a higher speed, nevertheless.

As has been described, one embodiment of this invention uses one digital broadcast reception module that handles TS inputs of the same type. The digital broadcast signals of different channels, coming from a plurality of tuner modules, can therefore be simultaneously decoded.

Using one digital broadcast reception module that handles TS inputs of the same type, the embodiment can reproduce digital broadcast signals on a plurality of channels. The embodiment can therefore handle many channels at low cost, without developing a new digital broadcast reception module that can process, in parallel, the inputs of many channels.

## Claims

1. A digital broadcast receiving apparatus **characterized by** comprising:
an input conversion module (11) configured to receive digital broadcast packets of a plurality of channels and to produce, from each packet, a packet containing a counter value indicating the time the packet arrived and an additional data packet containing specific data to add to the packet containing the counter value; and
a digital broadcast reception module (21) configured to receive and demultiplex each packet supplied from the input conversion module, to compare the program clock reference (PCR) added to the packet with the counter value and to correct a system time clock (STC) as needed.

2. The digital broadcast receiving apparatus according to claim 1, **characterized in that** the input conversion module includes as many buffer memory modules as input channels, and adds the counter value to compare with the program clock reference (PCR), to each packet of any channel.

3. The digital broadcast receiving apparatus according to claim 1, **characterized in that** the input conversion module includes as many buffer memory modules as input channels, and the digital broadcast reception module formats the counter value to compare with the program clock reference (PCR) so that the counter value may be acquired.

4. The digital broadcast receiving apparatus according to claim 3, **characterized in that** the program clock reference is so formatted that the packet containing the counter value at the arrival of the TS packet from any input channel and the packet containing the specific data associated with the packet are arranged in a predetermined order.

5. The digital broadcast receiving apparatus according to claim 3, **characterized in that** the program clock reference is so formatted that the packet containing the counter value at the arrival of the TS packet from any input channel and the packet containing the specific data associated with the packet are arranged in parallel.

6. A signal processing method **characterized by** comprising:
receiving digital broadcast packets of a plurality of channels and producing, from each packet, a packet containing a counter value indicating the time the packet arrived and an additional data packet containing specific data to add to the packet containing the counter value; and
receiving and demultiplexing the packet containing a counter value and the additional data packet, and comparing the program clock reference (PCR) added to each packet, with the counter value and correcting a system time clock (STC) as needed.
